# DEMANDE DE BREVET EUROPEEN

(11) **EP 0 559 543 A1**
(43) Date de publication de la demande: **08.09.1993**
(21) Numéro de dépôt: 93400520.8
(22) Date de dépôt: 01.03.1993
(51) Int. Cl.: C02F 3/30

(54) **Procédé d'épuration, par voie biologique, des effluents à forte concentration en azote ammoniacal**

(30) Priorité: 02.03.1992 FR 9202681; 20.11.1992 FR 9214003
(71) Demandeur: LAFARGE FONDU INTERNATIONAL, F-92521 Neuilly sur Seine Cedex (FR)
(72) Inventeur: Bonnin, Jacky, F-44240 La Chapelle-sur-Erdre (FR); Helard, Laure, F-35000 Rennes (FR)
(74) Mandataire: Michelet, Alain

(57) **Abrégé**

L'invention concerne un procédé de réduction de la pollution azotée des effluents à forte concentration en azote amoniacal, tels que les lisiers.

L'effluent à traiter est soumis successivement à une opération de dénitrification biologique en anoxie, puis à une opération de nitrification biologique réalisée par aération de l'effluent et, lors de ces deux opérations, la concentration en nitrates résiduels est réglée à des valeurs comprises entre 0 et 6 g/l.

## Description

La présente invention a trait au domaine de l'épuration, par voie biologique, des effluents à forte concentration en matières organiques et en azote ammoniacal, tels que les lisiers.

Par effluent fortement concentré en azote ammoniacal, on entend un effluent qui, après nitrification biologique, présente une concentration en nitrates supérieure à 1 g/l.

La concentration en matières organiques est entre autres caractérisée par le taux de Matières Volatiles Totales (MVT). Les concentrations considérées ici sont supérieures à 5 g/l, par exemple de l'ordre de 20 à 35 g/l.

Les effluents chargés en azote ammoniacal, quand ils sont riches en éléments fertilisants comme les lisiers, sont utilisés depuis toujours pour apporter aux sols la matière organique et les éléments nutritifs nécessaires aux cultures.

Qu'il s'agisse d'épandage ou de traitement en vue d'un rejet dans le milieu naturel, l'azote est le facteur limitant. Il est présent dans le lisier sous formes organique et ammoniacale. Quand ces effluents sont rejetés dans le milieu naturel, l'azote ammoniacal est oxydé en nitrites, puis en nitrates par des micro-organismes nitrifiants qui se trouvent naturellement dans les sols : il en résulte un enrichissement en nitrates des sols qui représentent une menace de pollution des eaux souterraines par lessivage.

Pour mettre un terme à une telle situation, différents procédés physico-chimiques ou biologiques d'élimination de l'azote ont été proposés.

L'invention se situe dans le domaine de l'épuration par voie biologique, par nitrification - dénitrification, c'est-à-dire par transformation en étapes successives de l'azote ammoniacal en nitrates, suivie de la réduction des nitrates en azote gazeux. Ces deux étapes complémentaires font appel à des processus différents, voire contradictoires, ce qui entraîne des difficultés de mise en oeuvre. En effet :
- la première étape est aérobie. Elle est connue comme nécessitant :
   . une teneur limitée en charge carbonée ;
   . une température comprise entre 5 et 40° C. Sinon, en dessous de 5° C, le démarrage de la nitrification est extrêmement aléatoire ;
   . un pH plutôt alcalin, car il est connu que le taux de croissance des bactéries nitrifiantes décroît très sensiblement quand le pH devient inférieur à 7,2 ;
   . un taux d'oxygène dissous minimum de 0,5 mg/l ;
   . la présence d'ammoniaque ou d'acide nitreux en concentration convenable. En effet, le démarrage d'une installation de nitrification, ainsi que son fonctionnement, ne peut se faire que si le taux d'ammoniaque et d'acide nitreux est maintenu bas, car sinon, la nitrification biologique risque d'être inhibée ;
- la deuxième étape n'a lieu que dans la condition particulière de l'anoxie, c'est-à-dire celle d'un milieu dépourvu d'oxygène dissous, où le seul oxygène disponible est celui des nitrates. Au cours de cette deuxième étape, les nitrates sont réduits en azote à l'aide de bactéries dénitrifiantes. Pour ce faire, elle requiert :
   . un substrat carboné donneur d'électrons et un rapport C/N oxydé (NOx, x étant égal à 2 à 3) de l'ordre de 10 pour que la dénitrification puisse être efficace ;
   . une teneur suffisante de la charge carbonée, nécessitant généralement l'ajout de carbone exogène ;
   . une concentration en oxygène libre qui doit être faible et inférieure à 0,5 mg/l ;
   . un pH plutôt alcalin, les valeurs normales se situant entre 7 et 8,2 ;
   . la présence de nitrates ou de nitrites comme accepteur d'électrons ;
   . une température comprise entre 5° C et 60° C. En dessous de 5° C, l'activité des bactéries est en effet très ralentie.

Pour respecter les conditions de fonctionnement de la première étape de nitrification avec un lisier généralement riche en pollution carbonée et azotée, on a habituellement recours à des étapes supplémentaires en tête de traitement biologique. Ainsi, pour réduire la pollution carbonée, on pratique souvent une séparation des solides par floculation à l'aide de réactifs, puis décantation. La pollution carbonée peut aussi être réduite par une digestion biologique anaérobie, produisant un gaz combustible intéressant sur le plan économique, mais qui complique fortement la filière de traitement.

La pollution azotée est, quant à elle, réduite le plus souvent par dilution de l'effluent à traiter, ce qui augmente de façon importante le volume des ouvrages de traitement biologique.

Pour ne pas perturber les réactions de dénitrification et de nitrification, ces réactions sont habituellement réalisées dans deux réacteurs séparés entre lesquels on établit, au moyen de pompes :
. une recirculation de l'effluent à traiter ;
. un recyclage des boues biologiques.

Dans ce cas, les débits d'effluent entrant et sortant et les conditions de fonctionnement dans chaque réacteur sont ajustés, de sorte que :
. dans le réacteur de dénitrification, la concentration en nitrates et en nitrites soit négligeable, et la concentration d'ammonium ne soit que de quelques dizaines de mg/l ;
. dans le réacteur de nitrification, la concentration en ammonium soit négligeable, et la concentration en nitrates ne soit que de quelques dizaines de mg/l.

Outre sa complexité, un tel procédé conduit à la production importante de boues liquides liées à la dilution du lisier nécessitant une étape supplémentaire d'épaississement des boues, par exemple par déshydratation.

Un but principal de l'invention vise la mise au point d'un procédé de traitement biologique ne comportant pas les inconvénients de l'art antérieur, et qui soit apte à traiter efficacement un effluent à forte concentration en matières organiques et en azote ammoniacal, tels que les lisiers, c'est-à-dire apte à réduire fortement l'azote minéral et les composés carbonés, avec des moyens simples et peu onéreux.

L'invention concerne donc un procédé de réduction de la pollution azotée des effluents à forte concentration en azote ammoniacal, tels que les lisiers.

Selon l'invention, l'effluent à traiter est soumis successivement à une opération de dénitrification biologique en anoxie, puis à une opération de nitrification biologique réalisée par aération de l'effluent et, lors de ces deux opérations, la concentration en nitrates résiduels est réglée à des valeurs comprises entre 0 et 6 g/l.

La mise en oeuvre successive d'un traitement de dénitrification et d'un traitement de nitrification, qui nécessitent chacun des caractéristiques contradictoires du milieu, est une opération difficile. Elle l'est tout particulièrement lors du traitement d'effluent à forte concentration en matières organiques et en azote ammoniacal, dont l'apport dans le réacteur modifie substantiellement ses différents paramètres.

L'invention permet la réalisation des conditions nécessaires au développement et au maintien d'une biomasse particulièrement concentrée et active.

Un autre objectif de l'invention est la réalisation d'un procédé d'épuration biologique de matières organiques à forte concentration en azote ammoniacal, possédant une capacité de traitement suffisante pour permettre son exploitation industrielle.

Un autre but de l'invention est un procédé réduisant le besoin en oxygène, par rapport aux procédés connus, pour le traitement d'une quantité donnée de matières organiques.

Le pH de l'effluent, au cours du traitement biologique selon l'invention, se situe généralement dans une gamme non basique.

Il peut être légèrement acide, de l'ordre de 6,0 à 7,0. On se trouve donc dans des conditions tout à fait différentes de celles des procédés classiques qui travaillent à des concentrations en nitrates très inférieures à 1 g/l, puisqu'elles sont généralement inférieures à 0,1 g/l et, en conséquence, à des pH plutôt basiques.

De façon surprenante, bien que le pH de l'effluent traité puisse évoluer vers des valeurs légèrement acides, donc vers des valeurs connues pour défavoriser les réactions biologiques de dénitrification et de nitrification, l'élimination des nitrates par le procédé selon l'invention s'avère être très efficace. Le procédé selon l'invention peut également fonctionner de manière efficace à un pH légèrement basique, d'environ 7 à 8.

Selon une autre caractéristique de l'invention, également importante pour son efficacité, le traitement biologique de l'effluent commence par une opération de dénitrification et se poursuit par un traitement de nitrification. Ceci permet d'éviter la perte par oxydation des sources carbonées généralement présentes dans les effluents à traiter, et d'en bénéficier pour les besoins de la dénitrification.

Grâce au procédé selon l'invention, la dénitrification est particulièrement efficace et s'effectue à des vitesses très élevées, pouvant atteindre 10 mg.N/g MV/h (exprimées en mg d'azote -NOx réduit par gramme de matières volatiles et par heure). La cinétique de dénitrification selon l'invention est par conséquent très supérieure à celles des procédés de dénitrification biologique connus qui n'excèdent généralement pas 5,2 mgN/gMV/h.

Dans ces conditions, on réalise préférentiellement des séquences de dénitrification en anoxie, relativement courtes par rapport à celles de nitrification, ce qui permet d'éviter de perturber cette dernière, lorsque ces deux séquences sont réalisées dans la même cuve.

De préférence encore, la durée de la séquence de dénitrification rapportée à la durée d'un cycle de traitement biologique comprenant une séquence de nitrification et une séquence de dénitrification est d'environ 10 % ou inférieure.

Le procédé selon l'invention est avantageux à plus d'un titre :
- il est tout d'abord d'une grande simplicité ;
- il ne nécessite pas de recirculation de boues ;
- il peut être mis en oeuvre sans réactif, ni adjuvant ;
- il permet d'atteindre des taux d'épuration élevés, jusqu'à 100 % sur l'azote minéral, de l'ordre de 85 % sur le carbone, et de l'ordre de 60 % sur le phosphore minéral. En effet, on a observé que la teneur en phosphore minéral dans l'effluent, au terme d'une séquence d'anoxie, et après au moins une alternance des phases aérobie et anaérobie, est réduite de façon importante.
- alors que les procédés connus, qui diluent les effluents à forte concentration en azote ammoniacal (dilution 2 à 3 fois généralement) nécessitent des installations surdimensionnées (de l'ordre de 750 m3 de cuves pour traiter journalièrement un lisier brut dilué d'un volume variant entre 5 et 8 m3 avec un temps de séjour de 115 jours environ et un taux d'épuration de l'azote minéral qui n'est que d'environ 60 %), le procédé selon l'invention permet de traiter efficacement ce même lisier dans une installation de dimension plus raisonnable (de l'ordre de 200 m3 pour traiter journalièrement environ 6 m3 de lisier brut avec un temps de séjour de 30 à 40 jours au plus et un taux d'épuration de l'azote minéral jusqu'à 100 %.
- il comporte peu de risque de production d'ammoniac NH₃, en raison de la forte capacité de nitrification et des vitesses élevées des réactions d'oxydation de l'azote. En effectuant des contrôles sur la qualité de l'air au-dessus de l'effluent en cours de traitement, afin de vérifier la transformation de NO₃ en N₂, la demanderesse n'a pas détecté de composés de type NOx (N₂O par exemple), ni NH₃.

Conformément à un mode de réalisation préféré, le procédé selon l'invention se déroule en alternance dans une seule cuve contenant un effluent, l'effluent étant soumis successivement à au moins un cycle de traitement composé d'une dénitrification biologique en anoxie, suivie d'une nitrification biologique en aérobie, et les entrées et sorties d'effluent de la cuve étant réalisées de la manière suivante :
. elles permettent la mise en oeuvre du procédé de façon à assurer avantageusement la consommation des matières sèches présentes dans l'effluent et, par conséquent, une réduction de la DCO et de la DBO des effluents à traiter ;
. au cours des séquences d'anoxie et, de préférence, au début de chacune de ces séquences, on ajoute une quantité déterminée d'effluent à traiter ;
. au terme des séquences d'anoxie, on soutire une certaine quantité d'effluent de la cuve, de préférence égale à celle introduite.

De préférence encore, le prélèvement d'effluent de la cuve est effectué au terme des séquences d'anoxie, après une période courte d'aération et avant que la réaction de nitrification ne soit déjà initiée. On a en effet observé les taux d'épuration du phosphore minéral les plus élevés en procédant de la sorte.

Dans le cas des déjections animales, l'ajout, pendant la phase d'anoxie, d'effluent frais non traité, mais de préférence tamisé au moins partiellement, contribue à l'efficacité de la dénitrification, car il apporte le substrat carboné nécessaire à la dénitrification. Dans ces conditions, un apport d'une source de carbone extérieure n'est pas nécessaire.

On peut ainsi obtenir un effluent traité ne comportant plus de nitrates.

En outre, grâce à cette variante du procédé selon l'invention, le traitement individuel d'épuration à la ferme peut être envisagé. Etant donné que le traitement biologique selon l'invention ne nécessite pas de dilution du lisier, il n'est donc pas nécessaire de prévoir des moyens de stockage surdimensionnés pour conserver les effluents traités destinés à l'épandage, comme c'est le cas actuellement avec les procédés connus.

L'effluent traité, qui est prélevé de la cuve, de préférence au terme de la séquence d'anoxie, peut être ensuite :
a) soit épandu sur un sol, de préférence recouvert d'une végétation ;
b) soit transféré dans des bassins de décantation (lagune, décanteur, clarificateur, etc...), où la dénitrification peut se poursuivre. Dans ce cas, il ne produit pas d'odeur au moins pendant un mois.
c) soit stocké sous aération pour éviter sa fermentation ;
d) soit soumis à un traitement chimique d'épuration complémentaire, par addition d'au moins un agent faisant apport de l'élément aluminium et au moins un agent faisant apport de l'élément calcium dans les effluents à traiter ;
e) soit traité dans des systèmes visant à obtenir un effluent purifié pouvant être rejeté dans le milieu naturel, par exemple à l'aide de charbons actifs, de résines échangeuses d'ions ou par osmose inverse, ou par un second traitement biologique bien connu en soi.

De préférence encore, l'agent employé pour effectuer l'épuration complémentaire à l'issue du traitement biologique selon l'invention comprend le ciment alumineux C₃A (abréviation courante pour 3CaO.Al₂O₃) et/ou le ciment alumineux C₁₂A₇ (abréviation courante pour 12CaO.7Al₂O₃) et de la chaux.

Le traitement biologique général selon l'invention combiné au traitement chimique précité en (d) permet d'épurer encore l'effluent à traiter des composés carbonés et des composés minéraux phosphorés.

Un autre avantage important de l'association du traitement chimique précité au procédé biologique selon l'invention réside dans le fait que l'effluent finalement obtenu est limpide. Grâce au traitement chimique, il a en effet perdu la coloration marron que lui donnent, notamment, les sels biliaires qui se trouvent piégés dans le précipité.

Avantageusement, préalablement au traitement biologique de nitrification et de dénitrification, l'effluent à traiter est débarrassé d'une partie des matières solides en suspension par des techniques bien connues en soi, telles que le tamisage, la filtration, la décantation ou tout autre procédé de séparation de phase permettant de séparer les plus grosses particules en suspension. La séparation de phase facilite le traitement biologique et permet de récupérer un résidu organique pouvant servir, en l'état ou après compostage, comme fertilisant.

En pratique, le maintien des phases d'anoxie et d'aérobie qui se succèdent au cours du procédé selon l'invention est préférentiellement obtenu dans les conditions suivantes :
- au démarrage de l'installation, on ensemence l'effluent à traiter avec des bactéries nitrifiantes, de préférence à l'aide de boues déjà nitrifiées. L'ensemencement de l'effluent avec des bactéries dénitrifiantes n'est généralement pas nécessaire, car elles sont naturellement présentes dans les effluents à traiter.
- le traitement aérobie, par introduction d'air ou d'oxygène dans l'effluent à traiter, est réalisé de préférence au moyen de diffuseurs à fines bulles. L'aération ayant pour but de favoriser le développement des bactéries nitrifiantes, on règle l'introduction d'air ou d'oxygène pour avoir au moins 0,5 mg/l d'oxygène dissous dans l'effluent.
- le traitement anaérobie est obtenu par simple arrêt de fonctionnement du matériel insufflant l'air dans le système de diffusion (ventilateur, compresseur ou surpresseur).

Le procédé d'épuration biologique de matières organiques à forte concentration en azote ammoniacal de l'invention a donc avantageusement une phase de démarrage et une phase d'exploitation.

La phase de démarrage comporte les opérations :
. d'ensemencement d'un réacteur par des boues activées formant une biomasse initiale,
. de remplissage progressif du réacteur avec l'effluent à traiter.

La phase d'exploitation est cyclique ; chaque cycle comporte les phases suivantes :
. introduction dans le réacteur d'une charge d'effluent,
. traitement de dénitrification en anoxie,
. traitement de nitrification par aération,
. extraction d'une partie de l'effluent dénitrifié en quantité sensiblement égale à la charge d'effluent à traiter introduite.

Selon l'invention, lors de la phase de démarrage, la concentration en nitrates est inférieure à 6 g/l et, lors de la phase d'exploitation, cette concentration varie alternativement d'une valeur supérieure à une valeur résiduelle déterminée en fonction de l'utilisation finale.

Les traitements de nitrification et de dénitrification sont, de préférence, réalisés dans un réacteur unique.

La phase de démarrage est avantageusement suivie, avant la phase d'exploitation, d'une phase de réglage, au cours de laquelle le niveau d'azote résiduel est déterminé éventuellement par le contrôle de la surcharge en matières organiques à forte concentration ammoniacale introduite dans le réacteur et le choix de la durée du traitement de dénitrification.

Le taux de matières en suspension (MES) de l'effluent introduit dans le réacteur est faible, par exemple inférieur à 20 g/l. Lorsque le taux de matières en suspension (MES) de l'effluent à traiter est supérieur, il est décanté et tamisé sur compacteur avant son introduction dans le réacteur. Ce sera le cas des lisiers, fréquemment rencontrés, ayant des MES pouvant aller jusqu'à 60 g/l.

Pendant la phase de démarrage, lors du remplissage du réacteur, les taux de matières sèches (MST), de matières en suspension (MES) et de matières volatiles totales (MVT) du milieu biologique sont contrôlés, de manière à assurer le développement d'une biomasse active concentrée. On appelle "milieu biologique" l'ensemble du contenu du réacteur.

La constitution de cette biomasse active fortement concentrée, ayant par exemple un taux en matières en suspension (MES) de l'ordre de 8,5 à 10,5 g/l, est une condition importante permettant, lors de la phase de réglage, l'obtention du niveau de nitrates résiduels choisi, aussi faible que voulu et même nul.

Cette constitution est réalisée en favorisant, lors de la phase de démarrage, le développement d'une flore nitrifiante importante. Ce développement est obtenu, à partir d'un ensemencement par des boues activées par l'apport de carbone et d'azote provenant des effluents à traiter et par l'apport d'oxygène par un système d'aération, par formation de microbulles, placé au voisinage du fond du réacteur.

Au début de la phase de démarrage, l'aération est permanente, les effluents à traiter sont introduits à intervalles de temps constant, par quantités croissantes pour tenir compte de l'oxygénation croissante produite par les microbulles, en raison de la hauteur d'effluents croissante avec le niveau de remplissage, qu'elles traversent entre le système d'aération et la surface libre.

Pendant cette période où l'aération est permanente, le taux de nitrates croît.

Lorsque ce taux de nitrates atteint un niveau trop élevé, de l'ordre de 6 g/l, on constate le développement de phénomènes inhibiteurs limitant la progression de la biomasse nitrifiante.

Afin d'éviter ces phénomènes, lorsque le taux de nitrates atteint un niveau de l'ordre de 3 à 5 g/l, on procède à une dénitrification, par arrêt de l'oxygénation, en alternance avec la nitrification.

La durée de la dénitrification est brève par rapport à la durée de la nitrification.

Les effluents à traiter sont introduits dans le réacteur après la nitrification, au début de la phase d'anoxie.

Pendant la période de démarrage, on n'effectue pas de prélèvement.

Cette phase de démarrage a une durée de l'ordre de deux fois le temps de séjour des effluents à traiter, c'est-à-dire par exemple de l'ordre de 60 à 80 jours.

La phase de démarrage est avantageusement suivie d'une phase de réglage permettant de déterminer le taux d'azote résiduel de l'effluent surnageant prélevé lors de la phase d'exploitation.

Au cours de la phase de réglage, le choix de la durée d'anoxie (dénitrification) et l'introduction éventuelle de surcharge d'effluents à traiter permettent de contrôler le développement de la biomasse active et, par là, le taux de nitrates résiduels.

Lors de la phase d'exploitation, les effluents à traiter sont introduits dans le milieu biologique contenu par le réacteur après une étape de nitrification (aérobie), au début de l'étape d'anoxie. On procède alors à une étape de dénitrification (anoxie), on extrait une partie de l'effluent dénitrifié en quantité égale à l'effluent à traiter préalablement introduit, on procède alors à une nitrification, et on poursuit le cycle.

L'effluent dénitrifié prélevé est avantageusement séparé par décantation en des boues biologiques d'une part, et en un effluent surnageant d'autre part.

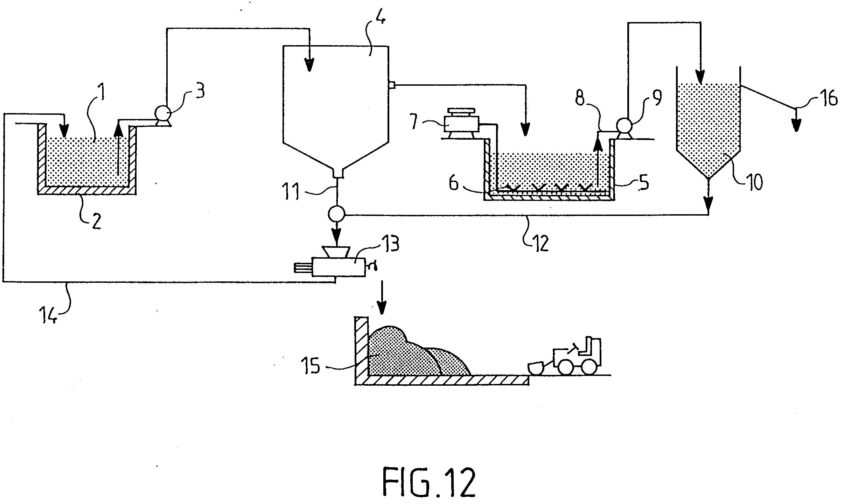

Un mode de mise en oeuvre particulier et non limitatif du procédé de l'invention sera maintenant décrit en référence à la Figure 12. Il est appliqué au traitement du lisier.

Le lisier 1 à traiter est prélevé de la préfosse 2 à l'aide de la pompe 3 pour alimenter le décanteur 4. Après avoir subi une opération de séparation de phases dans le décanteur 4, le lisier alimente le réacteur 5.

Le réacteur 5 est équipé d'un dispositif d'aération comportant des diffuseurs à fines bulles 6, alimentés par un générateur d'air 7. Après traitement dans le réacteur, l'effluent dénitrifié 8 est dirigé par une pompe 9 dans un deuxième décanteur 10.

On appelle "boues de décantation" les boues 11 résultant de la décantation du lisier avant traitement et "boues biologiques" les boues 12 résultant de la décantation de l'effluent dénitrifié 8 après traitement biologique dans le réacteur 5.

Les boues de décantation 11 sont avantageusement soumises à un traitement de compactage par le compacteur 13. Elles sont alors séparées en un filtrat 14 qui est avantageusement dirigé vers la précuve 2 et mélangé au lisier à traiter 1.

Les matières organiques 15 résultantes sont stockées en vue d'une utilisation ultérieure.

Les boues biologiques 12 provenant de la décantation après traitement sont avantageusement mélangées aux boues de décantation 11 avant leur compactage. La décantation, après traitement dans le décanteur 10, produit un effluent brun 16 qui peut éventuellement subir un traitement chimique complémentaire en vue de l'extraction d'autres ions.

Le démarrage du réacteur dans de bonnes conditions permet d'optimiser son fonctionnement et d'obtenir le meilleur rendement.

A cet effet, il est nécessaire de disposer d'une certaine quantité de biomasse initiale, riche en bactéries nitrifiantes.

Dans les réalisations pratiques, cette biomasse initiale provient d'une installation préexistante par prélèvement d'une partie des boues biologiques 12 produites par décantation après traitement.

Au cas où on ne disposerait pas d'une telle masse initiale, celle-ci peut être reconstituée à partir du lisier lui-même.

En effet, on sait que le lisier contient des bactéries nitrifiantes. Toutefois, la concentration de ces bactéries est insuffisante pour qu'elles puissent directement constituer la biomasse initiale. Il convient donc d'assurer les conditions de leur développement (milieu riche en oxygène qui peut être obtenu par aération en présence de produits azotés et carbonés). Toutefois, le développement de cette biomasse peut être relativement long, et c'est la raison pour laquelle il est préférable de démarrer l'installation à partir d'une biomasse préexistante.

Le réacteur 5 est alors rempli d'eau jusqu'à un niveau légèrement supérieur à celui des diffuseurs 6 qui sont placés au fond de celui-ci.

La biomasse initiale est alors apportée et le dispositif d'aération activé.

Cette aération est maintenue pendant une durée de l'ordre de 24 heures, de manière à produire une boue ayant une bonne activité.

On ajoute alors du lisier décanté par quantités croissantes, tout en contrôlant le développement de la biomasse, c'est-à-dire en suivant le taux de matières sèches totales (MST), la matière en suspension (MES), les matières volatiles totales (MVT) et le taux d'azote.

On veille également à éviter la présence excessive d'ammoniaque.

Le décanteur 4 est tel que le lisier décanté présente un taux de matières en suspension (MES) faible, de préférence inférieur à 20 g/l.

Lorsque ces opérations ont permis une montée de la concentration en nitrates jusqu'à un taux de l'ordre de 3 à 4 g/l, on commence à faire alterner les périodes de dénitrification qui ont lieu en anoxie, c'est-à-dire par arrêt de l'installation d'aération, et les phases de nitrification. Les périodes de dénitrification en anoxie sont brèves (de 1 à 4 heures). Le cycle complet de dénitrification - nitrification dure 24 heures.

L'extraction de lisier vers le décanteur 10 est commencée, lorsque le réacteur a été rempli au niveau de sa charge nominale.

La phase de démarrage dure au total de 60 à 80 jours. On engage alors la phase de réglage, telle que décrite plus haut, qui permet de déterminer le taux de nitrates résiduels.

On entre alors dans la phase d'exploitation.

Lors de la phase d'exploitation, le temps de séjour moyen du lisier dans le réacteur est de l'ordre de 40 jours.

Chaque cycle a une durée de 24 heures, comme précédemment le traitement de dénitrification, en anoxie, a une durée courte, comprise entre 1 et 4 heures ; le traitement, en aérobie, de nitrification occupe la période complémentaire.

La charge de lisier à traiter est apportée au début de la période de dénitrification, c'est-à-dire à un moment où la concentration en nitrates est élevée. Toutes les conditions sont alors réunies pour produire une dénitrification très rapide : forte concentration en nitrates (comprise entre 200 et 400 mg/l pour une teneur en nitrates résiduels nulle), absence d'oxygène rapidement après l'arrêt du dispositif d'aération, apport d'une grande quantité de matières organiques, sources de carbone et de bactéries anaérobies dénitrifiantes par le lisier brut.

Parallèlement à la baisse de la concentration en nitrates, jusqu'à l'obtention de la concentration résiduelle complète, on produit une réduction importante de la charge carbonée par consommation du carbone sans apport d'oxygène externe.

On obtient ainsi des cinétiques de nitrification et de dénitrification très rapides permettant de réduire le temps de séjour et diminuant le besoin en oxygène. On a ainsi obtenu une dégradation des matières organiques et d'azote avec une consommation d'oxygène de l'ordre de 1 kg d'oxygène transféré par kg de DBO5.

Dans la terminologie employée ici, le taux de matières sèches totales (MST) correspond au résidu sec à 105° C, obtenu par pesée et séchage ou déshydratation.

Les matières en suspension (MES) sont le résultai de la centrifugation pendant 20 mn à 3500 tours/mn d'un poids connu de l'échantillon et séchage à 105° C du culot. Cette méthode de mesure est dérivée de la norme AFNOR NF 790-105.

Les matières volatiles totales (MVT) correspondent à la différence entre le résidu sec à 105° C et le résidu sec à 550° C (soit entre les MST et les matières minérales). Cela correspond à la norme AFNOR NF-U44-160.

### EXEMPLES

### Exemple 1

### Description du fonctionnement d'une installation à une concentration maximale de 1,5 g/l de nitrates

L'installation d'épuration comprend :
- des moyens de séparation de phase (tamisage ou filtration, etc...),
- une cuve de 200 m3 dans laquelle sont réalisées les réactions de nitrification et de dénitrification. Elle est équipée d'un dispositif permettant d'effectuer l'aération, qui est constituée d'un ventilateur insufflant un débit adéquat d'air dans un dispositif de diffusion par "fines bulles" préalablement installé au fond du réacteur.

L'effluent, en l'occurrence un lisier de porc, qui a subi une simple séparation de phase, a les caractéristiques suivantes (exprimées en g/l) :
- Matières Sèches Totales (MST) : 40
- Demande Biochimique en Oxygène (DBO5) : 20
- Demande Chimique en Oxygène (DCO) : 50
- Azote minéral sous forme ammoniacale (N-NH₄) : 3,2
- Azote total (NG) : 4,0
- Phosphore total (P) : 0,7

A la mise en route de l'installation, le réacteur est amené à son volume et sa concentration de travail par nitrification par voie biochimique en aération continue, en augmentant progressivement la charge quotidienne. Ce choix est guidé par la destination finale du lisier (fertilisant, rejet en milieu naturel...). En effet, les travaux de recherche, conduits par la demanderesse, ont permis d'établir que le rendement d'épuration d'azote (calculé par différence entre lisier sortant et lisier entrant) est d'autant plus élevé que le niveau de concentration en nitrates du réacteur est plus bas, ou que la concentration du lisier de départ est plus élevée.

Lors de la mise en route de l'installation, les caractéristiques de l'effluent nitrifié dans le réacteur sont les suivantes (exprimées en g/l) :
- MST : 15
- DBO5 : 1
- DCO : 7,5
- MVT : 10
- N-NO₃ : 0,35
- N-NH₄ : 0,07
- HPO₄ : 0,4
- pH : 6-7

On notera le pH légèrement acide en raison des concentrations élevées en nitrates.

Les paramètres de fonctionnement du procédé d'épuration biologique sont les suivants :
- volume traité par jour : 7 m3
- charge volumique traitée par jour : 3,5 % par jour
- charge massique traitée par jour : 10 à 12 mg d'azote par g de matières volatiles
- DBO/jour : 140 kg
- temps d'anoxie : 2 à 3 heures par période de 24 heures

L'objectif est donc d'opérer des cycles de 24 heures permettant de traiter le volume quotidien, soit :
- To : arrêt de l'aération
- To + 10 mn environ : ajout de 7 m3 de lisier tamisé
- To + 2 h 30 : remise en service de l'aération
- To + 3 h : prélèvement de 7 m3 du réacteur biologique

Dans le tableau qui suit, on donne les caractéristiques de l'effluent en fonction de la chronologie des évènements.

| | | Dénitrification (NO₃₋ > N₂) en anoxie pendant 2 à 3 heures | | Nitrification (NH₄₋ > NO₃) en aérobie pendant 21 à 22 heures | |
|---|---|---|---|---|---|
| | Etat de la cuve en fin de cycle arrêt de l'aération : To | Ajout de lisier tamisé (7 m3) To + 10 mm | Fin de dénitrification To + 2 h 30 | Retrait de 7 m3 To + 3 h | Fin de nitrification |
| Volume (m3) | 200 | 207 | 207 | 200 | 200 |
| Concentration NO3 (g/l) | 1,5 | 1,45 | 0,97 | 0,97 | 1,5 (0,97 + 05) |
| Concentration NH4 (g/l) | 0,05 | 0,2 | 0,2 | 0,2 | 0,05 |
| Quantité NO3 (kg) | 300 | 300 | 200 | 194 | 300 |
| Temps | T0 | T1 (T0 + 10 mn) | T2 | T3 | T0 + 24 h = état initial |

Les performances obtenues sont les suivantes :
- vitesse de nitrification : 5 g d'azote minéral transformé par heure et par m3
- vitesse de dénitrification : 45 g d'azote minéral par heure et par m3
- rendement d'épuration sur azote minéral traité : 90 %

Les 7 m3 sont :
- soit transférés dans une cuve de lagunage pour poursuivre la dénitrification,
- soit soumis à un traitement chimique de précipitation des nitrates,
- soit épandus en l'état, ou après lagunage ou stockage, sans ou avec aération.

A l'occasion de ce traitement biologique, les paramètres suivants ont été contrôlés de la manière suivante :
- NH₄+ est contrôlé par spectrophotométrie,
- NO₃- est dosé par chromatographie ionique,
- l'oxygène dissous est dosé en continu à l'aide d'une sonde flottante avec transmetteur d'oxygène,
- le pH est mesuré à l'aide d'une électrode spécifique,
- le DBO5 est obtenu conformément à la norme NF T90-103,
- le DCO est obtenu selon la norme NF T90-101,
- HPO₄ est mesuré par chromatographie ionique.

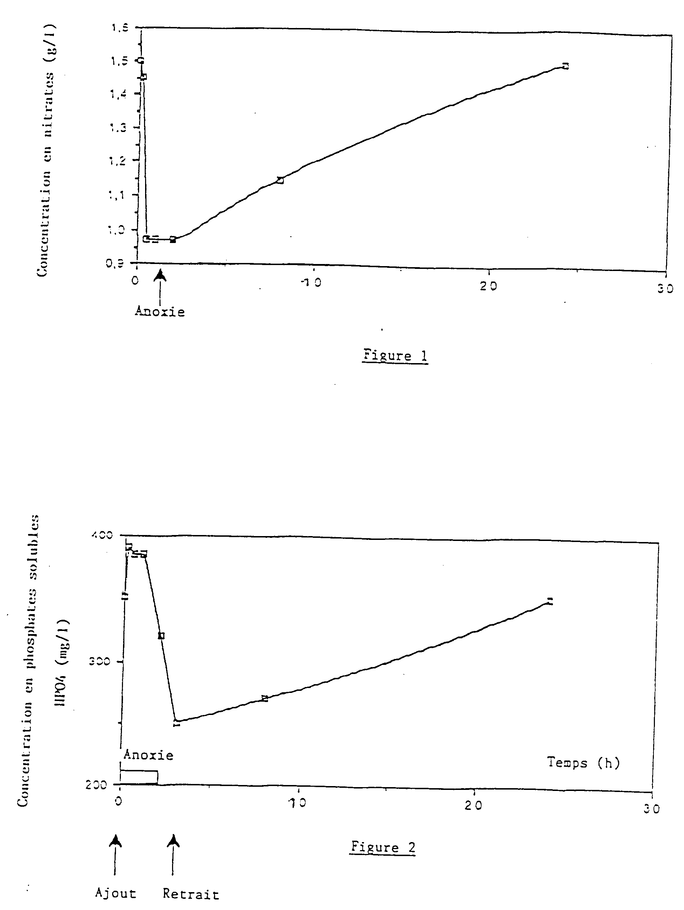

Les Figures 1 et 2 montrent l'évolution dans le temps au cours d'un cycle de dénitrification/nitrification de la concentration en nitrates et en phosphates.

Les caractéristiques de l'effluent soutiré après traitement biologique correspondent à un ou plusieurs cycles, et les taux d'épuration obtenus sont les suivants :

| | en g/l | Taux d'épuration sur lisier tamisé |
|---|---|---|
| MST | 15 | 62 % |
| DBO5 | 0,8 | 96 % |
| DCO | 5 | 90 % |
| N-NO₃ | 0,2 | 93 % |
| HPO₄ | 0,25 | 60 % |

Grâce au procédé selon l'invention, les performances précitées sont encore assurées avec des transferts de charges atteignant 10 m3 de lisier brut par jour.

De même, si on réduit la phase d'anoxie à 2 heures dans le fonctionnement de l'installation décrite dans cet exemple, on atteint encore les niveaux de performances précitées.

### Exemple 2

L'expérience décrite dans l'exemple 1 est renouvelée, mais cette fois avec un cycle de traitement biologique de dénitrification et de nitrification conduisant à une évolution de la concentration en nitrates entre 2 g/l et 2,5 g/l.

Le démarrage de l'expérience est effectué comme décrit dans l'exemple 1 (conditions expérimentales : traitement de lisier de porc après tamisage ; taux d'alimentation = 3 %, anoxie = 3 h/24).

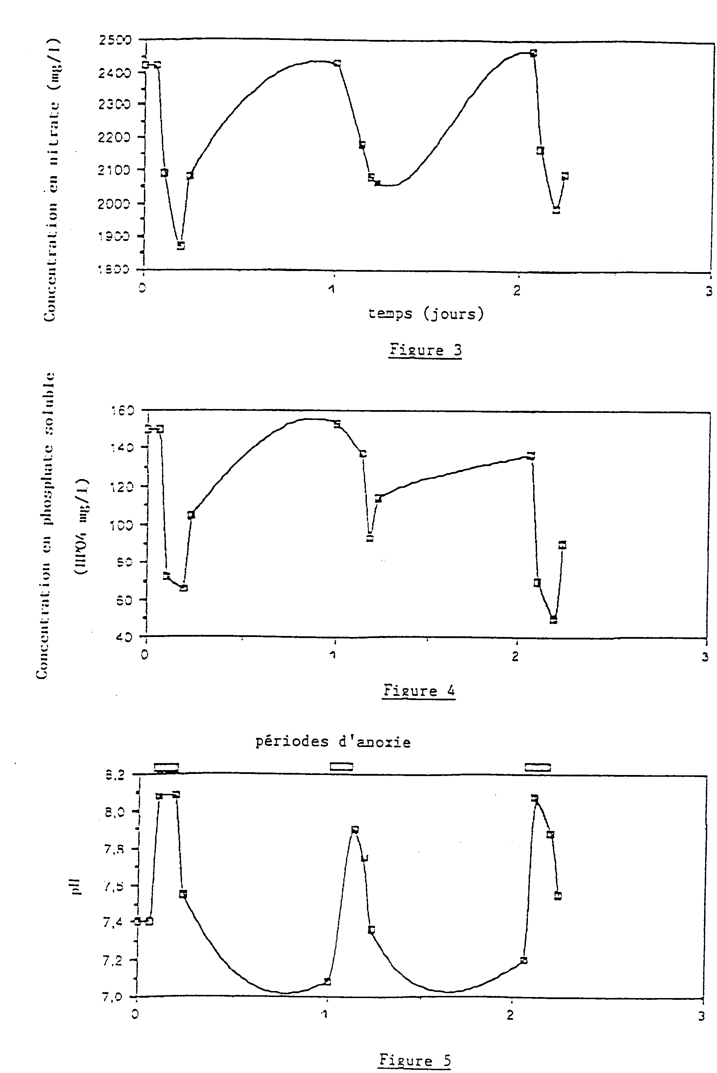

La chronologie des évènements dans la cuve de dénitrification/nitrification est identique à l'exemple 1. Seuls diffèrent les niveaux de concentration de départ dans la cuve. Les Figures 3, 4 et 5 montrent l'évolution dans le temps, au cours d'un cycle de nitrification /dénitrification, de la concentration en nitrates, en phosphates et l'évolution du pH. Les performances atteintes au cours d'un cycle sont les suivantes :
- les concentrations du lisier retiré et les taux d'épuration sur le lisier tamisé sont :
   . sur N-NO₃, une concentration de 0,45 gN/l correspondant à une épuration de 86 %,
   . sur HPO₄, une concentration de 0,08 gP/l correspondant à une épuration de 50 %,
- les vitesses de dénitrification observées sur la première heure d'anoxie sont de 7,3 ± 0,5 mgN/gMV/h,
- les taux d'épuration en DCO, MST et DBO, et donc l'épuration relative au carbone, sont identiques à ceux obtenus dans l'exemple 1.

### Exemple 3

L'expérience décrite dans l'exemple 1 est renouvelée, mais cette fois avec un cycle de traitement biologique de dénitrification et de nitrification conduisant à une évolution de la concentration en nitrates entre 3 g/l et 3,5 g/l.

Le démarrage de l'expérience est effectué comme décrit dans l'exemple 1 (conditions expérimentales : traitement de lisier de porc après décantation ; taux d'alimentation = 3 %, anoxie = 2 h/24).

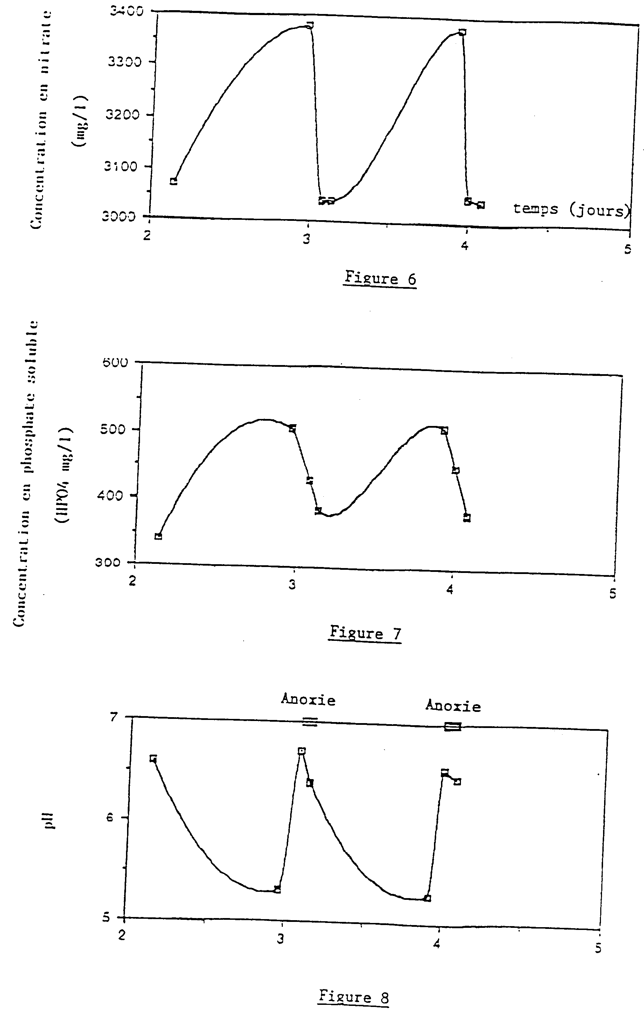

La chronologie des évènements dans la cuve de dénitrification/nitrification est identique à l'exemple 1. Seuls diffèrent les niveaux de concentration de départ dans la cuve. Les Figures 6, 7 et 8 montrent l'évolution dans le temps, au cours d'un cycle de nitrification /dénitrification, de la concentration en nitrates, en phosphates et l'évolution du pH. Les performances atteintes au cours d'un cycle sont les suivantes :
- les concentrations du lisier retiré et les taux d'épuration sur le lisier tamisé sont :
   . sur N-NO₃, une concentration de 0,7 gN/l correspondant à une épuration de 78 %,
   . sur HPO₄, une concentration de 0,35 gP/l correspondant à une épuration de 30 %,
- les vitesses de dénitrification observées sur la première heure d'anoxie sont de 7,7 mgN/gMV/h,
- les taux d'épuration en DCO, MST et DBO, et donc l'épuration relative au carbone, sont identiques à ceux obtenus dans l'exemple 1.

### Exemple 4

L'expérience décrite dans l'exemple 1 est renouvelée, mais cette fois avec un cycle de traitement biologique de dénitrification et de nitrification conduisant à une évolution de la concentration en nitrates entre 4,3 g/l et 5,4 g/l.

Le démarrage de l'expérience est effectué comme décrit dans l'exemple 1 (conditions expérimentales : traitement de lisier de porc après tamisage ; taux d'alimentation = 3 %, anoxie = 3 h/24).

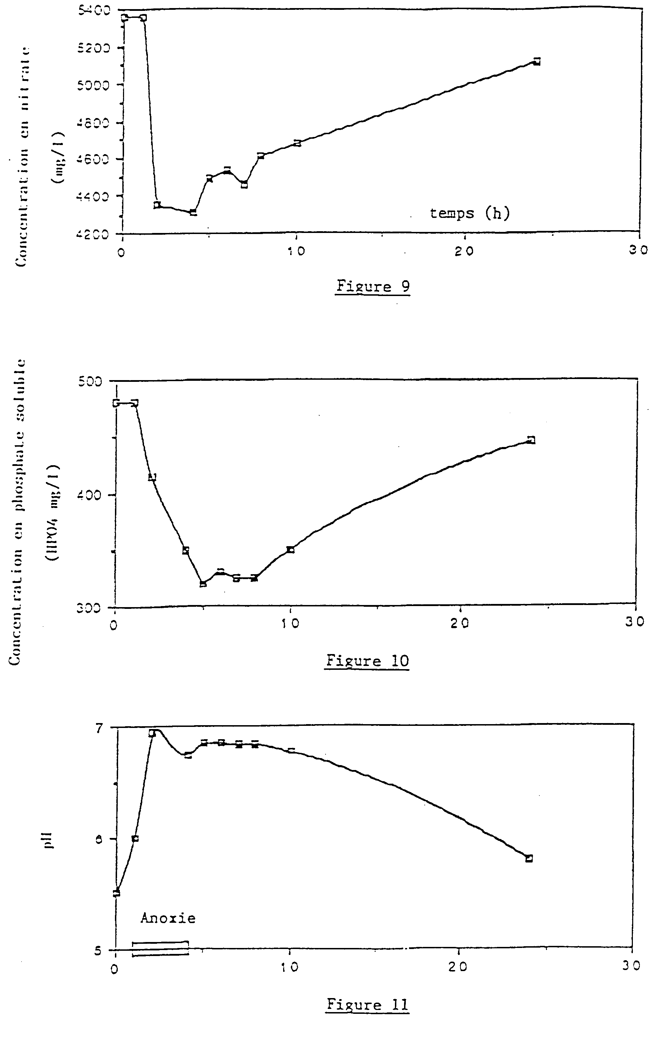

Comme on peut le voir sur les Figures 9, 10 et 11, la chronologie des évènements dans la cuve de dénitrification/nitrification se fait sur des cycles de 24 h, avec des prélèvements plus rapprochés. Seuls diffèrent les niveaux de concentration de départ dans la cuve. Les Figures 9, 10 et 11 montrent l'évolution dans le temps, au cours d'un cycle de nitrification /dénitrification, de la concentration en nitrates, en phosphates et l'évolution du pH. Les performances atteintes au cours d'un cycle sont les suivantes :
- les concentrations du lisier retiré et les taux d'épuration sur le lisier tamisé sont :
   . sur N-NO₃, une concentration de 1,0 gN/l correspondant à une épuration de 70 %,
   . sur HPO₄, une concentration de 0,32 gP/l correspondant à une épuration de 36 %,
- les vitesses de dénitrification observées sur la première heure d'anoxie sont de 18 mgN/gMV/h,
- les taux d'épuration en DCO, MST et DBO, et donc l'épuration relative au carbone, sont identiques à ceux obtenus dans l'exemple 1.

### Exemple 5

Description du fonctionnement d'une installation à une concentration de 0 mg/l de nitrates résiduels.

Le terme "0 mg/l" est atteint par une installation fonctionnant à son taux maximum d'épuration.

L'installation comprend :
- des moyens de séparation de phase (décantation + filtration),
- un réacteur biologique équipé d'un dispositif d'aération pour apporter les quantités d'oxygène adéquates,
- un dispositif de séparation des boues biologiques par décantation naturelle.

L'effluent à traiter, en l'occurrence un lisier de porc qui a subi la séparation de phase, a les caractéristiques suivantes (en g/l) :
- MST : 31 g/l
- DBO5 : 14,7 g/l
- DCO : 44,2 g/l
- N-K : 2,7 g/l (80 % sous forme ammoniacale)

Le volume traité est de 6 m3/jour dans un volume réactionnel de 211 m3, soit un temps de séjour de 35 jours.

Les paramètres caractéristiques du milieu biologique sont les suivants :
- [MST] =: 17,0 g/l
- [MES] =: 11,6 g/l
- [MVT] =: 9,1 g/l

La charge massique est en moyenne de 0,036 kq DBO5/kg MES.j.

Le réacteur biologique était auparavant réglé pour une production de nitrates résiduels correspondant à une concentration de 600 à 800 mg/l de NO₃.

Le passage à un effluent produit à 0 mg de nitrate nécessite une période de réglage dont l'objectif est de dénitrifier plus que nitrifier, de façon à résorber le stock de nitrates maintenu dans la cuve.

Ceci est obtenu en une dizaine de jours avec le calendrier suivant :
- J1 - J2 :: Etat cuve à 600 mg NO₃ résiduels 1 h/24 d'anoxie - 6 m3/jour traités
- J3 :: Début de modification des paramètres
- J3 + J4 :: Allongement du temps d'anoxie 2 h/24
- J5 à J7 :: Augmentation du volume traité de 40 % (8,4 m3/jour)
- J11 :: Nouvel état d'équilibre obtenu
Nitrate résiduel : 0 mg
1 h à 1 h 30 d'anoxie/jour - 6 m3/jour

Quelques valeurs de [NO₃] résiduels caractéristiques :
- J1 :: 610 mg/l
- J2 :: 619 mg/l
- J3 :: 517 mg/l
- J4 :: 400 mg/l
- J5 :: 380 mg/l
- J7 :: 135 mg/l
- J9 :: 205 mg/l
- J10 :: 19 mg/l
- J11 :: 2 mg/l
- J15 :: 0 mg/l

A partir de J11 : valeurs moyennes du réacteur biologique
- [NO₃] résiduel :: 3 mg/l
- DCO :: 10,5 g/l
- DBO :: 1,5 g/l
- HPO₄ :: 250 mg/l
- pH :: 8,1

Taux d'épuration : 99 %
Vitesse de nitrification : 3,4 g N/h/m3
Vitesse de dénitrification : 61 g N/h/m3 ou 6,75 mg N/gMV/h

| | Fin de cycle | Ajout + 6 m3 | Fin Dénitrif | Retrait 6 m3 | Fin Nitrif |
|---|---|---|---|---|---|
| Volume m3 | 211 | 217 | 217 | 211 | 211 |
| [NO₃] mg/l | 260 | 253 | 3 | 3 | 260 |
| [NH₄] mg/l | 20 | 95 | 95 | 95 | 20 |
| Qté NO₃ (kg) | 54,9 | 54,9 | 0,65 | 0,63 | 54,9 |
| Temps | To | To+10mn | To+1h30 | To+3h | To+24h |

## Revendications

1. Procédé de réduction de la pollution azotée des effluents à forte concentration en azote ammoniacal, tels que les lisiers, caractérisé en ce que l'effluent à traiter est soumis successivement à une opération de dénitrification biologique en anoxie, puis à une opération de nitrification biologique réalisée par aération de l'effluent et, en ce que, lors de ces deux opérations, la concentration en nitrates résiduels est réglée à des valeurs comprises entre 0 et 6 g/l.

2. Procédé selon la revendication 1 pour épuration biologique d'un effluent contenant des matières organiques à forte concentration en azote ammoniacal ayant une phase de démarrage et une phase d'exploitation, la phase de démarrage comportant les opérations :
. d'ensemencement d'un réacteur par des boues activées formant une biomasse initiale,
. de remplissage progressif du réacteur avec l'effluent à traiter ;
la phase d'exploitation étant cyclique, chaque cycle comportant les phases suivantes :
. introduction dans le réacteur d'une charge d'effluent,
. traitement de dénitrification en anoxie,
. traitement de nitrification par aération,
. extraction de l'effluent dénitrifié en quantité égale à la charge d'effluent à traiter introduite.
caractérisé en ce que, lors de la phase de démarrage, la concentration en nitrates est inférieure à 6 g/l et que, lors de la phase d'exploitation, cette concentration varie alternativement d'une valeur supérieure à une valeur résiduelle déterminée en fonction de l'utilisation finale.

3. Procédé selon l'une des revendications 1 ou 2, caractérisé en ce que les traitements de nitrification et de dénitrification sont réalisés dans un réacteur unique.

4. Procédé selon l'une quelconque des revendications 1 à 3, caractérisé en ce que l'effluent à traiter introduit dans le réacteur a un taux de matières en suspension (MES) faible.

5. Procédé selon la revendication 4, caractérisé en ce que l'effluent à traiter a un taux de matières en suspension inférieur à 20 g/l.

6. Procédé selon l'une quelconque des revendications 2 ou 3, caractérisé en ce que, pendant la phase de démarrage, lors du remplissage du réacteur, les taux de matières sèches (MST), de matières en suspension (MES) et de matières volatiles totales (MVT) sont contrôlés, de manière à assurer le développement de la biomasse.

7. Procédé selon la revendication 6, caractérisé en ce que la phase de démarrage comporte d'abord une étape d'aération permanente, jusqu'à l'obtention d'une concentration en nitrates supérieure à 2 g/l, puis une succession de traitements de dénitrification en anoxie et de nitrification par aération sans extraction, la concentration maximum en nitrates étant maintenue approximativement constante.

8. Procédé selon l'une des revendications 2 à 7, caractérisé en ce que l'effluent dénitrifié extrait est séparé par décantation en boues biologiques et en un effluent brun.

9. Procédé selon l'une des revendications 1 à 8, caractérisé en ce que les boues de décantation de l'effluent à traiter sont compactées.

10. Procédé selon la revendication 9, caractérisé en ce que les boues biologiques sont mélangées aux boues de décantation avant compactage.
